# EUROPEAN PATENT SPECIFICATION

(11) **EP 3 248 840 B1**
(45) Date of publication and mention of the grant of the patent: **03.11.2021**
(21) Application number: 17172969.2
(22) Date of filing: 25.05.2017
(51) Int. Cl.: B60Q 1/26, F21S 43/14, F21S 43/239, F21S 43/243, F21S 43/249, G02B 6/00, F21V 8/00

(54) **AUTOMOTIVE LIGHTING APPLIANCE**
FAHRZEUGSBELEUCHTUNGSEINRICHTUNG
APPAREIL D'ÉCLAIRAGE D'AUTOMOBILE

(30) Priority: 25.05.2016 IT UA20163800
(43) Date of publication of application: 29.11.2017
(73) Proprietor: Marelli Automotive Lighting Italy S.p.A., 10078 Venaria Reale (TO) (IT)
(72) Inventor: BUZZURRO, Alessandro, 33028 Tolmezzo (IT); SACCA', Alessandro, 33028 Tolmezzo (IT); SAMMITO, Davide, 33028 Tolmezzo (IT); SVETTINI, Marco, 33028 Tolmezzo (IT)
(74) Representative: Bellemo, Matteo

(56) References cited:
- EP-A2- 2 816 276
- WO-A1-2013/114747
- WO-A1-2016/016175
- DE-A1-102014 110 225
- DE-T5-112014 003 720

## Description

The present invention relates to an automotive lighting appliance.

In more detail, the present invention relates to a headlight or taillight for cars and the like, i.e. a lighting appliance adapted to be incorporated into a vehicle with the function of lighting the surrounding area of the vehicle, or to signal the presence, the position and/or the movement direction of the vehicle. Use to which the following disclosure will make explicit reference without however any loss of generality.

As is known, the taillights for cars and motor vehicles in general usually comprise: a substantially basin-shaped rear casing, which is structured so as to be stably recessed into in a specially designed seat in the rear part of the vehicle body; a front half-shell, which is arranged to close the opening of the casing so as to surface from the vehicle body, and is usually provided with a plurality of transparent or semi-transparent portions, generally having different colours to one another; and a series of lighting assemblies which are located inside the casing each immediately beneath a respective transparent or semi-transparent portion of the front half-shell, so as to be able to backlight the same transparent or semi-transparent portion of the half-shell.

Generally, each lighting assembly is univocally related to a specific light signal, and is thus structured so as to emit a light beam that, once come out from the automotive light through the front half-shell, meets the homologation specifications provided for said light signal.

Over the last few years, some automotive manufacturers have chosen to equip their new car models with taillights wherein the front half-shell is provided with at least one transparent or semi-transparent portion which is narrow and elongated in shape, i.e. substantially ribbon-like, is horizontally arranged when the automotive light is mounted on the vehicle, and is usually associated to the position light signal or the blinking direction/turn light signal.

Currently, each of the transparent or semi-transparent ribbon-like portions is backlighted by a lighting assembly which essentially comprises: a large light-guide plate made of photoconductive material, which is placed inside the rear casing with the front sidewall adjacent to the transparent or semi-transparent ribbon-like portion of the front half-shell, substantially for the whole length of the same transparent or semi-transparent ribbon-like portion, and with the rear sidewall facing the bottom of the rear casing; and a row of LED diodes which are placed on the bottom of the rear casing, in abutting against the rear sidewall of the light-guide plate, and are oriented so as to direct the light produced directly into the body of the light-guide plate. Light that then travels inside the body of the light-guide plate, coming out of the light-guide plate through the front sidewall of the plate.

Unfortunately, the light-guide plate usually has a rather large width, making it extremely difficult to reduce the depth of the automotive light.

To overcome this drawback some automotive light manufacturers have shortened the rear sidewall of the light-guide plate and placed a group of LED diodes in abutment against the end segment of the rear sidewall so as to direct the light produced towards the adjacent and contiguous lateral sidewall of the light-guide plate which, in turn, is capable of reflecting the incident light towards the front sidewall of the light-guide plate.

In this way, the light produced by this small group of LED diodes reaches the front sidewall of the light-guide plate following an optical path that has a length substantially equal to that of the optical path followed by the light emitted by the LED diodes placed in abutment against the rest of the rear sidewall of the light-guide plate.

Unfortunately, experimental tests has shown that a small part of the light emitted by the second group of LED diodes, once entered into the body of the light-guide plate, succeeds in directly reaching the front sidewall of the light-guide plate, and coming out from a small portion of the front sidewall that is immediately adjacent to the vertex that joins with the lateral sidewall of the light-guide plate.

Since the rest of the light produced by the LED diodes evenly distributes across the whole length of the front sidewall of the light-guide plate, this small end segment of the front sidewall of the light-guide plate has a brightness visibly greater than the rest of the front sidewall.

As a result, the light coming out of the light-guide plate does not have a uniform intensity throughout the whole length of the front sidewall of the plate, and is therefore unable to evenly backlight the corresponding transparent or semi-transparent ribbon-like portion of the front half-shell, with all the problems that this entails.

A light signal that excessively varies in its intensity along the front half-shell of the automotive light, in fact, is considered aesthetically unattractive by the external observer and is obviously undesired by the automotive manufacturers.

DE 10 2014 110225 A1 discloses an automotive lighting appliance comprising a light-guide plate made of photoconductive material and light emitting means which are located at or close to the sidewall of the light-guide plate, and are adapted to direct the light produced inside the light-guide plate so that said light travels inside the light-guide plate towards the front of the light-guide plate and is emitted from the light-guide plate. The light-guide plate is divided into at least a first and a second plate-like sector co-planar to each other, which are arranged mutually adjacent and contiguous, are made of photoconductive materials with refractive indices different from each other, and are stably joined to each other to form a single plate-like body/piece along a join line.

Aim of the present invention is to eliminate the adverse effects due to the presence of LED diodes turned towards the lateral sidewall of the light-guide plate, without thereby reducing the intensity of the light emitted from the front sidewall of the light-guide plate parallel to the main optical axis of the automotive light.

In compliance with these aims, according to the present invention there is provided an automotive light as defined in claim 1 and preferably, though not necessarily, in any of the claims dependent thereon.

The present invention will now be described with reference to the accompanying drawings, which illustrate an example of nonlimiting embodiment, wherein:
- Figure 1 is a perspective view of a taillight for cars realized according to the teachings of the present invention, with parts in section and parts removed for clarity;
- Figure 2 is a partially-exploded perspective view of the automotive light shown in Figure 1, with parts removed for clarity;
- Figures 3 and 4 are, respectively, a plan view and a perspective view of the lighting assembly of the automotive light shown in Figure 1, with parts removed for clarity;
- Figure 5 is a side view of the lighting assembly shown in Figure 4, sectioned along section line A-A and with parts removed for clarity; whereas
- Figure 6 is a side view of the lighting assembly shown in Figure 4, sectioned along section line B-B and with parts removed for clarity.

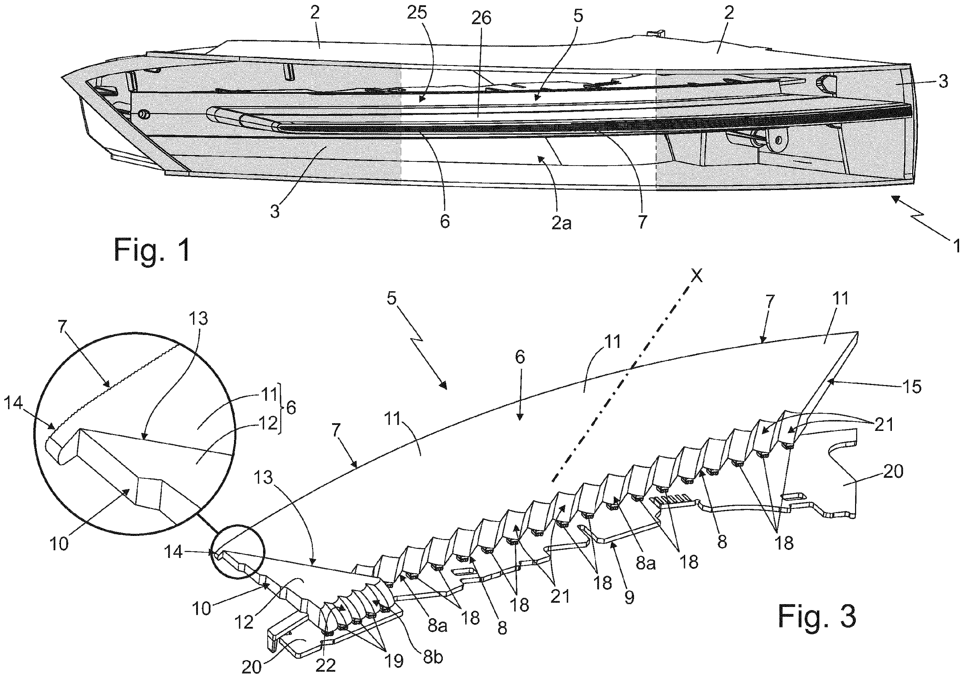

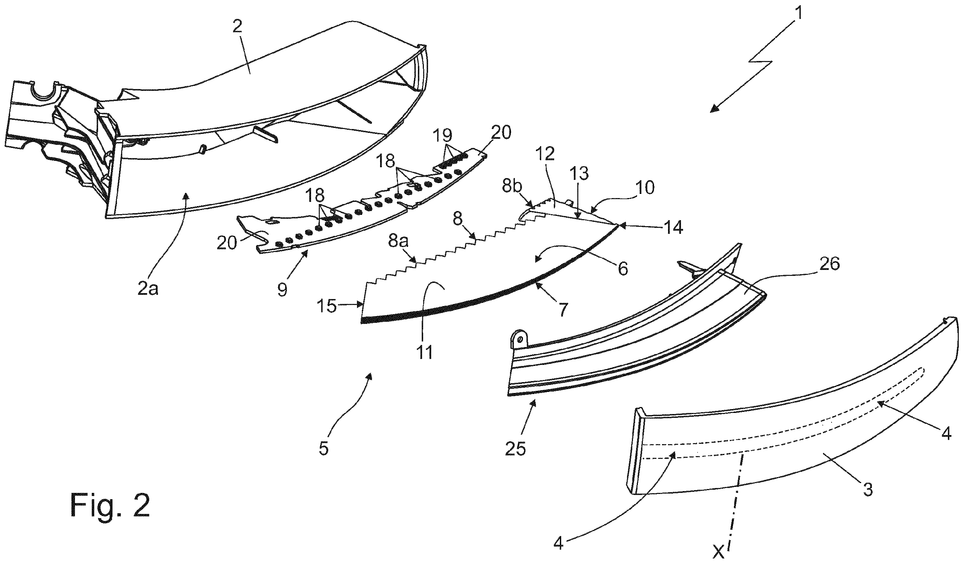

With reference to Figures 1 and 2, number 1 denotes as a whole an automotive lighting appliance particularly suitable to be fixed/incorporated into a vehicle, preferably with the function of lighting the surrounding area of the vehicle, or to signal the presence, the position and/or the movement direction of the vehicle.

In other words, the lighting appliance 1 is particularly suitable to be fixed to the front or rear part of the vehicle body of an car, van, truck, motorcycle or the like, so as to perform the function of automotive headlight or taillight.

With reference to Figures 1 and 2, in the example shown, in particular, the lighting appliance 1 is preferably structured to be stably recessed into the rear part of the vehicle body of a car or similar motor vehicle, so as to perform the function of an automotive taillight.

In more detail, the lighting appliance 1 firstly comprises: a rigid and preferably made of plastic material, rear casing 2 which is roughly basin-shaped, and is preferably structured so as to be at least partially recessed into a seat specifically formed in the rear part of the vehicle body (not shown); a rigid and preferably made of plastic material, a front half-shell 3 which is arranged to close the opening 2a of rear casing 2, preferably so to simultaneously surface outside of the vehicle body, and is provided with one or more transparent or semi-transparent portions, optionally also coloured; and one or more electrically-powered lighting assemblies, each of which emits light on command and is arranged inside the rear casing 2 in a position so as to backlight a corresponding transparent or semi-transparent portion of the front half-shell 3, preferably separately and independently from the other lighting assemblies. Obviously, in a different embodiment, the rear casing 2 could also be structured to be simply fixed in a cantilevered manner on the rear part of the vehicle body (not shown).

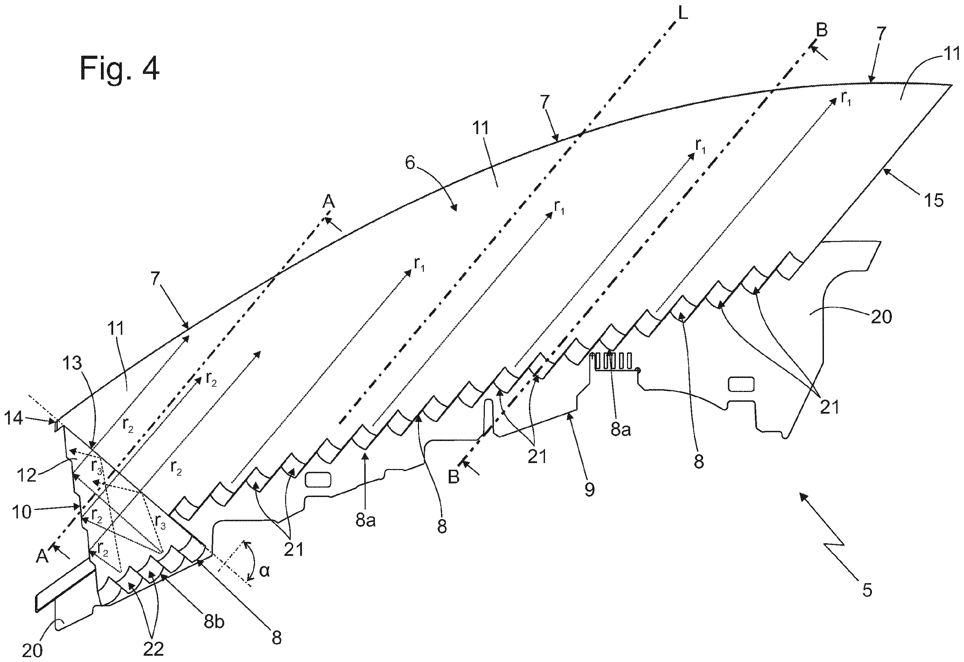

With reference to Figures 2, 3 and 4, additionally the lighting appliance 1 is provided with a main optical axis X which is parallel to the longitudinal axis of the vehicle when the lighting appliance 1 is correctly positioned/fixed on the vehicle body, and one or more of said lighting assemblies is/are preferably structured so as to direct the light outside of the lighting appliance 1 with a predominant component parallel to the main optical axis X of the lighting appliance.

In more detail, with reference to Figures 1 and 2, in the example shown, the front half-shell 3 is preferably provided with at least one transparent or semi-transparent portion 4 having a narrow and elongated shape, i.e. substantially ribbon-like, which preferably extends substantially horizontally when the lighting appliance 1 is mounted on the vehicle.

The lighting assembly designed to backlight the transparent or semi-transparent ribbon-like portion 4 of the lenticular half-shell 3, hereinafter referred to with the number 5, is instead placed inside the rear casing 2 immediately beneath the transparent or semi-transparent ribbon-like portion 4, so as to be directly facing the same transparent or semi-transparent ribbon-like portion 4 and is structured so as to direct the light produced towards the transparent or semi-transparent ribbon-like portion 4.

Preferably, the lighting assembly 5 is moreover structured to project/direct the light outside of the lighting appliance 1 through the transparent or semi-transparent ribbon-like portion 4 with a predominant component parallel to the main optical axis X of lighting appliance 1.

In the example shown, in particular, the rear casing 2 is preferably made of opaque plastic material, preferably via an injection moulding process. The front half-shell 3, on the other hand, is preferably made of transparent or semi-transparent plastic material, such as transparent or semi-transparent polycarbonate or polymethylmethacrylate, also in this case preferably via an injection moulding process.

With reference to Figures from 1 to 6, the lighting assembly 5 in turn comprises: at least one photoconductive-material light-guide plate 6, which is preferably made of transparent plastic material, and is arranged inside the rear casing 2 with its front sidewall 7 substantially coplanar and directly facing the transparent or semi-transparent ribbon-like portion 4 of front half-shell 3, preferably substantially for the whole length of the transparent or semi-transparent ribbon-like portion 4, and with its rear sidewall 8 facing the bottom of rear casing 2; and an electrically-powered light emitting device 9, which is capable of emitting light on command, extends inside the rear casing 2 at or close to the rear sidewall 8 of light-guide plate 6, and is capable of directing the produced light directly inside the body of the light-guide plate 6 substantially throughout the entire length of rear sidewall 8. Light that then travels inside the body of light-guide plate 6 by virtue of the same physical principles that regulate the travelling of light inside optical fibre cables, and is emitted from light-guide plate 6 through the plate front sidewall 7 directly towards the transparent or semi-transparent ribbon-like portion 4 of front half-shell 3.

In more detail, the front sidewall 7 of light-guide plate 6 is preferably arranged locally adjacent/tangent to the transparent or semi-transparent ribbon-like portion 4 of front half-shell 3, preferably substantially throughout the whole length of the transparent or semi-transparent ribbon-like portion 4.

Preferably, the light-guide plate 6 also extends inside the rear casing 2 while remaining locally substantially perpendicular to the transparent or semi-transparent ribbon-like portion 4 of front half-shell 3. Preferably, the lying plane of the light-guide plate 6 is moreover substantially parallel to the main optical axis X of the lighting-appliance 1.

With reference to Figures 2, 3 and 4, the light emitting device 9 on the other hand comprises: a first electrically-powered light source which is located at or close to a first segment 8a of the rear sidewall 8 of light-guide plate 6, and is adapted to direct the light produced directly inside the light-guide plate 6 substantially throughout the whole length of segment 8a; and a second electrically-powered light source which is located at or close to a second segment 8b of the rear sidewall 8 of light-guide plate 6 consecutive and complementary to the segment 8a, and is adapted to direct the light produced directly inside the light-guide plate 6 substantially throughout the whole length of segment 8b.

In other words, the rear sidewall 8 of light-guide plate 6 is divided into at least a first 8a and a second 8b segment complementary to each other. The first light source is capable of lighting the segment 8a of the rear sidewall 8 of light-guide plate 6; the second light source is capable of lighting the segment 8b of the rear sidewall 8 of light-guide plate 6.

Preferably, the length of segment 8a of the rear sidewall 8 of light-guide plate 6 is moreover greater than the length of segment 8b.

With reference to Figures 2, 3 and 4, in addition, the light-guide plate 6 is provided with a first, preferably substantially rectilinear, sidewall 10 that connects/joins the front sidewall 7 of light-guide plate 6 to the segment 8b of rear sidewall 8.

The first light source is capable of directing the light produced inside the light-guide plate 6 so that said light directly reaches the front sidewall 7 of light-guide plate 6.

The second light source, on the other hand, is capable of directing the light produced inside the light-guide plate 6 so that said light reaches the lateral sidewall 10 of light-guide plate 6 and is there reflected by total internal reflection towards the front sidewall 7 of light-guide plate 6.

In other words, the light coming from the second light source reaches the lateral sidewall 10 of light-guide plate 6 with an incidence angle above the limit angle so as to be reflected by total internal reflection towards the front sidewall 7 of light-guide plate 6.

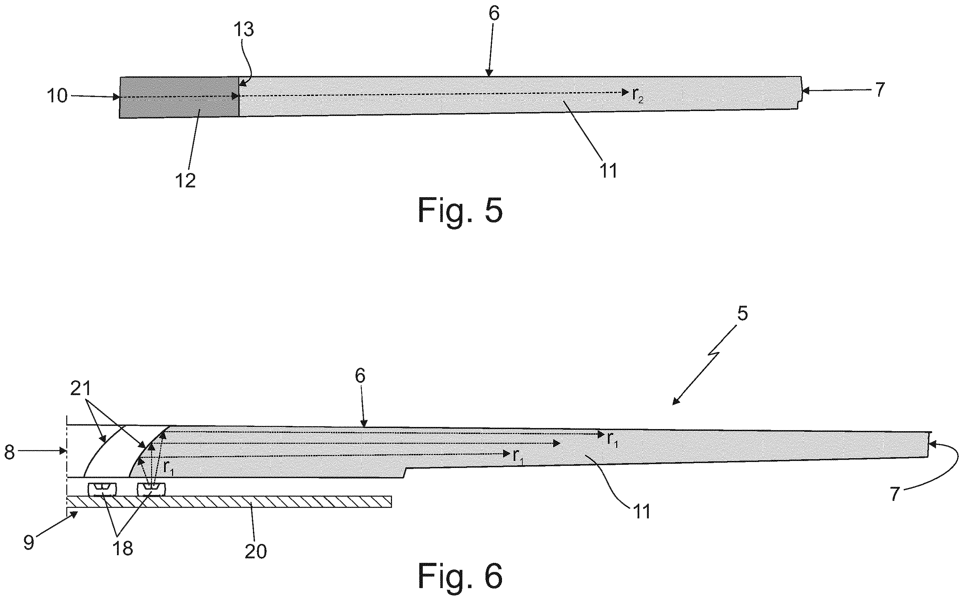

With reference to Figures 2, 3, 4, 5 and 6, in addition, the light-guide plate 6 is divided into at least two plate-like sectors 11 and 12 coplanar and complementary to each other and which are arranged *mutually adjacent and contiguous,* are made of photoconductive materials *with refractive indices different to one another, and are stably joined to each other to form a sole*/*single plate-like body*/*piece.*

In more detail, the two plate-like segments 11 and 12 are seamlessly joined to one another along a transversal join line/ band 13 which preferably takes up the whole thickness of the light-guide plate 6, and which roughly extends from the vertex 14 of the light-guide plate 6 delimited/identified by the front sidewall 7 and by the lateral sidewall 10 of the plate, up to an intermediate point of the rear sidewall 8 of light-guide plate 6 that preferably substantially coincides with the joining point between segment 8a and segment 8b of rear sidewall 8.

The plate-like sector 11 is thus shaped so as to substantially form the whole front sidewall 7 of light-guide plate 6 and the segment 8a of the rear sidewall 8 of light-guide plate 6.

Preferably, the light-guide plate 6 is moreover substantially quadrilateral in shape, and the plate-like sector 11 is shaped so as to additionally form the second lateral sidewall 15 of light-guide plate 6 connecting/joining the segment 8a of lateral sidewall 8 with the front sidewall 7.

The plate-like sector 12, in turn, is preferably substantially triangular in shape, and is designed so as to substantially form the whole lateral sidewall 10 of light-guide plate 6 and the segment 8b of the rear sidewall 8 of light-guide plate 6.

With reference to Figures 2, 3, 4, 5 and 6, the join line 13 between the plate-like sectors 11 and 12, therefore, extends along the light-guide plate 6 so as to be crossed by the light reflected by lateral sidewall 10 and directed towards the front sidewall 7 of light-guide plate 6.

In addition, the join line 13 between the plate-like sectors 11 and 12 is moreover arranged so as to reflect, for total internal reflection and away from the front sidewall 7 of light-guide plate 6, the light emitted by the second light source of light emitting device 9, and which is directed directly towards the front sidewall 7 of light-guide plate 6, while intersecting the join line 13 without firstly bouncing on the lateral sidewall 10 of light-guide plate 6.

In other words, the join line 13 is capable of reflecting, away from the front sidewall 7 of light-guide plate 6, the light arriving directly from the second light source of light emitting device 9 and directed towards the front sidewall 7 of light-guide plate 6.

With reference to Figures 2, 3, 4, 5 and 6, in the example shown, in particular, plate-like sector 11 preferably has an extension greater than that of plate-like sector 12.

Preferably, the two plate-like sectors 11 and 12 are moreover made of plastic material, via a co-injection moulding process.

In more detail, the plate-like sector 11 is preferably made of polycarbonate (PC) which has a refractive index approximately equal to about 1,586; whereas the plate-like sector 12 is preferably made of polymethylmethacrylate (PMMA) which in turn has a refractive index equal to about 1.493.

In other words, plate-like sector 11 preferably has a refractive index greater than the refractive index of plate-like sector 12.

Obviously, the variation of refractive index may also be obtained by using a same plastic material for both plate-like sectors 11 and 12, and altering the refractive index of one or both the plate-like sectors 11 and 12 with the addition of an additive.

With reference to Figures 2, 3 and 4, furthermore, the transversal join line 13 is preferably substantially rectilinear and preferably extends along the body of light-guide plate 6 with an *angle of inclination* α with respect to the main optical axis X of lighting appliance 1 preferably greater than 60°.

In the example shown, in particular, the transversal join line 13 preferably extends towards the joining point between segment 8a and segment 8b of the rear sidewall 8 of light-guide plate 6 while remaining locally substantially perpendicular to the main optical axis X of lighting appliance 1.

Preferably, the transversal join line 13 moreover departs from vertex 14 of light-guide plate 6, at the joint between the front sidewall 7 and the lateral sidewall 10 of light-guide plate 6.

With reference to Figures 2, 3, and 4, on the other hand, the lateral sidewall 10 of light-guide plate 6 preferably has a stepped profile. The lateral sidewall 15 of light-guide plate 6, in turn, is preferably substantially rectilinear, and preferably also locally substantially parallel to the main optical axis X of lighting appliance 1.

With reference to Figures 2, 3, 4 and 6, the first light source of light emitting device 9 in turn preferably comprises a first series of LED diodes 18 (acronym of Light Emitting Diode) or other light sources preferably of punctiform type, which are aligned one next to the other to form a row, are placed inside the rear casing 2 adjacent to the segment 8a of the rear sidewall 8 of light-guide plate 6, and are oriented so as to direct the light produced directly inside the plate-like sector 11.

Preferably, the row of LED diodes 18 moreover extends skimmed over one of the two faces of plate-like sector 11, aside and parallel to the segment 8a of the rear sidewall 8 of light-guide plate 6; and each LED diode 18 is preferably oriented so as to direct the light produced directly inside the plate-like sector 11 towards the rear sidewall 8 of light-guide plate 6. Light that then reaches the rear sidewall 8 of light-guide plate 6 with an incidence angle above the limit angle so as to be reflected by total internal reflection directly towards the front sidewall 7 of light-guide plate 6.

The second light source of light emitting device 9, in turn, preferably comprises a second series of LED diodes 19 (acronym of Light Emitting Diode) or other light sources preferably of punctiform type, which are aligned one next to the other to form a row, are placed inside the rear casing 2 adjacent to the segment 8b of the rear sidewall 8 of light-guide plate 6, and are oriented so as to direct the light produced directly inside the plate-like sector 12.

Preferably, the row of LED diodes 19 moreover extends skimmed over one of the two faces of plate-like sector 12, aside and parallel to the segment 8b of the rear sidewall 8 of light-guide plate 6; and each LED diode 19 is preferably oriented so as to direct the light produced directly inside the plate-like sector 12 towards the rear sidewall 8 of light-guide plate 6. Light that then reaches the rear sidewall 8 of light-guide plate 6 with an incidence angle above the limit angle so as to be reflected by total internal reflection directly towards the lateral sidewall 10 of light-guide plate 6.

In the example shown, in particular, LED diodes 18 and 19 are preferably located spaced apart one beside the other on a single support board 20 which preferably incorporates the power supply and control circuits of the diodes, and is arranged inside the rear casing 2 aside and preferably also locally substantially parallel to the light-guide plate 6.

Obviously in a different embodiment, the second light source of light emitting device 9 may also comprise only one LED diode 19.

With reference to Figures 2, 3, 4 and 6, preferably the segment 8a of the rear sidewall 8 of light-guide plate 6 is furthermore structured/shaped so as to collimate most of the light rays r₁ arriving from the LED diodes 18 and reflected towards the front sidewall 7 of light-guide plate 6 in a direction substantially parallel to the main optical axis X of lighting appliance 1.

In more detail, in the example shown the plate-like sector 11 of light-guide plate 6 preferably has, along the segment 8a of rear sidewall 8, a plurality of teeth or projecting protrusions 21 each of which has a curved surface with a preferably substantially parabolic profile. Each LED diode 18 is preferably placed in front of a respective tooth or projecting protrusion 21 so as to direct the light rays r₁ towards the curved surface of the tooth or projecting protrusion 21 which, in turn, is shaped so as to reflect the light rays r₁ towards the front sidewall 7 of light-guide plate 6, collimating also most of the light rays r₁ in a direction substantially parallel to the main optical axis X of lighting appliance 1.

Similarly, the segment 8b of the rear sidewall 8 of light-guide plate 6 is preferably structured/shaped so as to collimate most of the light rays r₂ arriving from the LED diodes 19 and directed towards the lateral sidewall 10 of light-guide plate 6 in a predetermined direction that intersects the lateral sidewall 10 with an angle of incidence greater than the limit angle so as to cause the total reflection of the light rays r₂ towards the front sidewall 7 of light-guide plate 6.

In more detail, in the example shown the plate-like sector 12 of light-guide plate 6 preferably has, along the segment 8b of rear sidewall 8, a second series of protruding teeth or protrusions 22 each of which has a curved surface preferably with a parabolic profile. Each LED diode 19 is preferably placed in front of a respective tooth or projecting protrusion 22 so as to direct the light rays r₂ towards the curved surface of the tooth or projecting protrusion 22 which, in turn, is shaped so as to reflect the light rays r₂ towards the lateral sidewall 10 of light-guide plate 6, preferably collimating the majority of light rays r₂ in a predetermined direction that intersects the lateral sidewall 10 of light-guide plate 6 with a predetermined incidence angle greater than the limit angle, thus proving the total reflection of light rays r₂ towards the transversal join line 13 in a second direction substantially perpendicular to the same transversal join line 13.

Obviously, the light rays r₂ can also be reflected towards the transversal join line 13 in a second direction such that the light rays r₂ reach the join line 13 with an angle of incidence less than the limit angle. In this way, the light rays r₂ coming from the lateral sidewall 10 of light-guide plate 6 can still freely cross the transversal join line 13 and continue inside the light-guide plate 6 up to the front sidewall 7 of light-guide plate 6.

Instead, the light rays r₃ coming from the LED diode or LED diodes 19 and going towards the front sidewall 7 of light-guide plate 6 without having firstly bounced on the lateral sidewall 10, arrive at the join line 13 with an incidence angle greater than the limit angle and are therefore reflected away from the front sidewall 7 of light-guide plate 6, towards the lateral sidewall 10 of light-guide plate 6.

With reference to Figures 1 and 2, the lighting assembly 5 preferably additionally comprises a supporting structure 25 preferably made of plastic material and which is located inside the rear casing 2, preferably resting on the bottom of rear casing 2, and is capable to keep the light-guide plate 6 and optionally also the support board 20 firmly in position under the front half-shell 3.

Preferably, the supporting structure 25 is moreover shaped so as to cover/hide the view of some parts of lighting assembly 5.

In more detail, in the example shown the supporting structure 25 is preferably stably fixed on the bottom of rear casing 2 and is preferably provided with a pass-through tubular sheath 26 which protrudes in cantilevered manner from the bottom of rear casing 2 towards the ribbon-like portion 4 of front half-shell 3 while remaining locally substantially perpendicular to front half-shell 3, and which is shaped so as to accommodate the light-guide plate 6 and optionally a part of the support board 20.

In the example shown, in addition, the supporting structure 25 is preferably made of an opaque plastic material, preferably via an injection moulding process.

The general operation of lighting appliance 1 is easily inferable from the above, and therefore does not need further explanations.

As regards instead the lighting assembly 5, the light rays r₃ that comes from the LED or LED diode/s 19 and are directed directly towards the front sidewall 7 of light-guide plate 6 (i.e. travelling towards the front sidewall 7 without having previously bounced on the lateral sidewall 10 of light-guide plate 6), arrive on the join line 13 between the plate-like sectors 11 and 12 with an incidence angle above the limit angle and are therefore reflected by total internal reflection towards a blind spot of the lateral sidewall 10 of light-guide plate 6.

The light rays r₂ that are instead reflected by the lateral sidewall 10 of light-guide plate 6, arrive at the join line 13 between the plate-like sectors 11 and 12 with an incidence angle less than the limit angle, and thus they pass from the plate-like sector 12 to the plate-like sector 11, and then proceed towards the front sidewall 7 of light-guide plate 6.

The advantages correlated to the particular structure of lighting assembly 5 are numerous.

Firstly, the presence of join line 13 allows to eliminate the excess lighting on the section/segment of the front sidewall 7 of light-guide plate 6 adjacent to the vertex 14 of light-guide plate 6, thus making the intensity of the light coming out from the light-guide plate 6 uniform throughout the whole length of the front sidewall 7 of the plate.

In addition, the stepped profile of the lateral sidewall 10 of light-guide plate 6 allows to minimize the extension of plate-like sector 12, thus reducing the overall extension of the light-guide plate 6 and, consequently, reducing the overall size of the rear casing 2.

It is finally clear that modifications and variants may be made to the lighting appliance 1 described above without however departing from the scope of the present invention.

For example, in a different embodiment, the LED diodes 18 forming the first light source of light emitting device 9 can be placed in abutment directly against the segment 8a of the rear sidewall 8 of light-guide plate 6, one spaced apart aside the other. Likewise, the LED diodes 19 forming the second light source of light emitting device 9 can be arranged in abutment directly against the segment 8b of the rear sidewall 8 of light-guide plate 6, one spaced apart aside the other.

In a different embodiment, furthermore, at least one of the two light sources of light emitting device 9 may comprise, in place of LED diodes 18, 19: a photoconductive material, light-guide bar preferably made of transparent plastic material and which extends inside the rear casing 2, skimming over the segment 8a and/or 8b of the rear sidewall 8 of light-guide plate 6; and one or more remote LED diodes which are located at one of the two ends of the light-guide bar, so as to direct the produced light inside the light-guide bar. The light-guide bar is structured so as to collect the light emitted by the remote LED diode/s and to convey it, in known manner, up to the segment 8a and/or to segment 8b of the rear sidewall 8 of the light-guide plate 6.

## Claims

1. An automotive lighting appliance (1) comprising: a substantially basin-shaped rear casing (2); a front half-shell (3) which is arranged to close the opening (2a) of the rear casing (2), and is provided with at least one transparent or semi-transparent portion (4); and at least a first lighting assembly (5) which emits light on command, and is located inside the rear casing (2) so as to be able to backlight said transparent or semi-transparent portion (4) of the front half-shell (3);
said lighting assembly (5) comprising: at least one light-guide plate (6) made of photoconductive material, which is arranged inside the rear casing (2) with a front sidewall (7) of the plate facing said transparent or semi-transparent portion (4) of the front half-shell (3), and with a rear sidewall (8) of the plate facing the rear casing (2); and light emitting means (9) which are located inside the rear casing (2) at or close to the rear sidewall (8) of the light-guide plate (6), and are adapted to direct the light produced inside the light-guide plate (6) so that said light travels inside the light-guide plate (6) towards the front sidewall (7) of the light-guide plate (6) and is emitted from the light-guide plate (6) through the same front sidewall (7) directed towards said transparent or semi-transparent portion (4) of the front half-shell (3);
wherein the light-guide plate (6) is divided into at least a first (11) and a second (12) plate-like sector co-planar to each other, which are arranged mutually adjacent and contiguous, are made of photoconductive materials with refractive indices different from each other, and are stably joined to each other to form a single plate-like body/piece along a join line (13) that extends substantially from the vertex (14) of the light-guide plate (6) delimited by the front sidewall (7) and by a first lateral sidewall (10) of the light-guide plate (6), to an intermediate point of the rear sidewall (8) of the light-guide plate (6).

2. Automotive lighting appliance according to Claim 1, **characterised in that** the light emitting means (9) comprise a first light source (18) which is located inside the rear casing (2) at or close to a first segment (8a) of the rear sidewall (8) of the light-guide plate (6), and is adapted to direct the light produced (r₁) inside the first plate-like sector (11) of the light-guide plate (6), so that said light (r₁) travels inside the light-guide plate (6) towards said front sidewall (7).

3. Automotive lighting appliance according to Claim 1 or 2, **characterised in that** the light emitting means (9) comprise a second light source (19), which is located inside the rear casing (2) at or close to a second segment (8b) of the rear sidewall (8) of the light-guide plate (6), and is capable of directing the light produced (r₂) inside the second plate-like sector (12) of the light-guide plate (6), so that said light (r₂) travels inside the light-guide plate (6) towards said first lateral sidewall (10) of the light-guide plate (6), and is reflected thereby towards the front sidewall (7) of the light-guide plate (6) .

4. Automotive lighting appliance according to Claim 3, **characterised in that** the join line (13) between said first (11) and second plate-like sector (12) is adapted to be passed through by the light (r₂) reflected by the first lateral sidewall (10) of the light-guide plate (6) towards the front sidewall (7) of the same light-guide plate (6), and to reflect, away from the front sidewall (7) of the light-guide plate (6), the light (r₃) coming from said second light source (19) and directed directly towards the front sidewall (7) of the light-guide plate (6) intersecting the join line (13) without having first bounced off the first lateral sidewall (10) of the light-guide plate (6).

5. Automotive lighting appliance according to Claim 3 or 4, **characterised in that** the join line (13) between said first (11) and second plate-like sector (12) reaches the rear sidewall (8) of the light-guide plate (6) substantially at the joining point between said first (8a) and said second (8b) segment of the rear sidewall (8) of the light-guide plate (6).

6. Automotive lighting appliance according to any one of the preceding claims, **characterised in that** the join line (13) between said first (11) and second (12) plate-like sectors is substantially rectilinear.

7. Automotive lighting appliance according to Claim 6, **characterised in that** the join line (13) extends on the light-guide plate (6) with an angle of inclination (α) greater than 60° with respect to a lighting-appliance main optical axis (X) which is arranged substantially parallel to the longitudinal axis of the vehicle when the lighting appliance (1) is placed on the vehicle body.

8. Automotive lighting appliance according to Claim 7, **characterised in that** the join line (13) extends on the light-guide plate (6) remaining substantially perpendicular to said main optical axis (X).

9. Automotive lighting appliance according to any one of the preceding claims, **characterised in that** said first lateral sidewall (10) of the light-guide plate (6) has a stepped profile.

10. Automotive lighting appliance according to any one of the preceding claims, **characterised in that** said first (11) and second (12) plate-like sectors are made of plastic material.

11. Automotive lighting appliance according to claim 10, **characterised in that** said first (11) and second plate-like sectors (12) are made via a co-injection moulding process.

12. Automotive lighting appliance according to any one of Claims 2 to 11, **characterised in that** the first light source (18) comprises a series of LED diodes (18), which are placed inside the rear casing (2) adjacent to the first segment (8a) of the rear sidewall (8) of the light-guide plate (6), and are oriented so as to direct the light produced directly inside the first plate-like sector (11).

13. Automotive lighting appliance according to Claim 12, **characterised in that** the first segment (8a) of the rear sidewall (8) of the light-guide plate (6) is shaped/structured so as to collimate a part of the light rays (r₁) coming from said series of LED diodes (18) and directed towards the front sidewall (7) of the light-guide plate (6), in a direction substantially parallel to a lighting-appliance main optical axis (X) which is arranged substantially parallel to the longitudinal axis of the vehicle when the lighting appliance (1) is placed on the vehicle body.

14. Automotive lighting appliance according to any one of Claims 3 to 13, **characterised in that** the second light source (19) comprises one or more LED diodes (19) which are placed inside the rear casing (2) against the second segment (8b) of the rear sidewall (8) of the light-guide plate (6), and are oriented so as to direct the light produced directly inside the second plate-like sector (12).

15. Automotive lighting appliance according to Claim 14, **characterised in that** the second segment (8b) of the rear sidewall (8) of the light-guide plate (6) is structured/shaped so as to collimate a part of the light rays (r₂) coming from the LED diode or diodes (19) of the second light source (19) and reflected towards the lateral sidewall (10) of the light-guide plate (6), in a direction that intersects said lateral sidewall (10) with an angle of incidence greater than the limit angle, so as to cause the total reflection of the light rays (r₂) towards the join line (13) and towards the front sidewall (7) of the light-guide plate (6).

16. Automotive light according to any one of the preceding claims, **characterised in that** the transparent or semi-transparent portion (4) of the front half-shell (3) is substantially ribbon-like.

## Patentansprüche

1. Kraftfahrzeug-Beleuchtungsvorrichtung (1), umfassend: ein im Wesentlichen schalenförmiges hinteres Gehäuse (2); eine vordere Halbschale (3), die so angeordnet ist, dass sie die Öffnung (2a) des hinteren Gehäuses (2) verschließt, und mit wenigstens einem transparenten oder halbtransparenten Abschnitt (4) versehen ist; und
wenigstens eine erste Beleuchtungsanordnung (5), die auf Befehl Licht emittiert und sich im Inneren des hinteren Gehäuses (2) angeordnet ist, so dass sie den transparenten oder halbtransparenten Abschnitt (4) der vorderen Halbschale (3) von hinten beleuchten kann;
wobei die Beleuchtungseinheit (5) umfasst: wenigstens eine Lichtleiterplatte (6) aus lichtleitfähigem Material, die im Inneren des hinteren Gehäuses (2) angeordnet ist, wobei eine vordere Seitenwand (7) der Platte dem transparenten oder halbtransparenten Abschnitt (4) der vorderen Halbschale (3) zugewandt ist, und wobei eine hintere Seitenwand (8) der Platte dem hinteren Gehäuse (2) zugewandt ist; und lichtemittierende Mittel (9), die im Inneren des hinteren Gehäuses (2) an oder in der Nähe der hinteren Seitenwand (8) der Lichtleiterplatte (6) angeordnet sind, und dazu eingerichtet sind, das im Inneren der Lichtleiterplatte (6) erzeugte Licht so zu lenken, dass das Licht im Inneren der Lichtleiterplatte (6) in Richtung zu der vorderen Seitenwand (7) der Lichtleiterplatte (6) läuft und von der Lichtleiterplatte (6) durch dieselbe vordere Seitenwand (7) in Richtung zu dem transparenten oder halbtransparenten Abschnitt (4) der vorderen Halbschale (3) emittiert wird;
wobei die Lichtleiterplatte (6) in wenigstens einen ersten (11) und einen zweiten (12) plattenartigen Sektor unterteilt ist, die koplanar zueinander sind, die wechselseitig benachbart und fortlaufend angeordnet sind, aus lichtleitfähigen Materialien mit voneinander verschiedenen Brechungsindizes gefertigt sind, und stabil miteinander verbunden sind, um einen einzigen plattenartigen Körper/Teil entlang einer Verbindungslinie (13) zu bilden, die sich im Wesentlichen von dem Eckpunkt (14) der Lichtleiterplatte (6), der durch die vordere Seitenwand (7) und eine erste laterale Seitenwand (10) der Lichtleiterplatte (6) begrenzt ist, zu einem Zwischenpunkt der hinteren Seitenwand (8) der Lichtleiterplatte (6) erstreckt.

2. Kraftfahrzeug-Beleuchtungsvorrichtung nach Anspruch 1, **dadurch gekennzeichnet, dass** die lichtemittierenden Mittel (9) eine erste Lichtquelle (18) umfassen, die im Inneren des hinteren Gehäuses (2) an einem oder in der Nähe eines ersten Segments (8a) der hinteren Seitenwand (8) der Lichtleiterplatte (6) angeordnet ist und dazu eingerichtet ist, das erzeugte Licht (r₁) in das Innere des ersten plattenartigen Sektors (11) der Lichtleiterplatte (6) zu lenken, so dass das Licht (r₁) innerhalb der Lichtleiterplatte (6) in Richtung zu der vorderen Seitenwand (7) läuft.

3. Kraftfahrzeug-Beleuchtungsvorrichtung nach Anspruch 1 oder 2, **dadurch gekennzeichnet, dass** die lichtemittierenden Mittel (9) eine zweite Lichtquelle (19) umfassen, die im Inneren des hinteren Gehäuses (2) an einem oder in der Nähe eines zweiten Segments (8b) der hinteren Seitenwand (8) der Lichtleiterplatte (6) angeordnet ist und fähig ist, das erzeugte Licht (r₂) in das Innere des zweiten plattenartigen Sektors (12) der Lichtleiterplatte (6) zu lenken, so dass das Licht (r₂) im Inneren der Lichtleiterplatte (6) in Richtung zu der ersten lateralen Seitenwand (10) der Lichtleiterplatte (6) läuft und dadurch in Richtung zu der vorderen Seitenwand (7) der Lichtleiterplatte (6) reflektiert wird.

4. Kraftfahrzeug-Beleuchtungsvorrichtung nach Anspruch 3, **dadurch gekennzeichnet, dass** die Verbindungslinie (13) zwischen dem ersten (11) und dem zweiten plattenartigen Sektor (12) so eingerichtet ist, dass sie von dem von der ersten lateralen Seitenwand (10) der Lichtleiterplatte (6) in Richtung zu der vorderen Seitenwand (7) derselben Lichtleiterplatte (6) reflektierten Licht (r₂) durchlaufen wird, und das Licht (r₃), das von der zweiten Lichtquelle (19) kommt und direkt in Richtung zu der die Verbindungslinie (13) schneidenden vorderen Seitenwand (7) der Lichtleiterplatte (6) gerichtet ist, von der vorderen Seitenwand (7) der Lichtleiterplatte (6) weg zu reflektieren, ohne dass es zuvor an der ersten lateralen Seitenwand (10) der Lichtleiterplatte (6) zurückgeworfen worden ist.

5. Kraftfahrzeug-Beleuchtungsvorrichtung nach Anspruch 3 oder 4, **dadurch gekennzeichnet, dass** die Verbindungslinie (13) zwischen dem ersten (11) und dem zweiten plattenartigen Sektor (12) die hintere Seitenwand (8) der Lichtleiterplatte (6) im Wesentlichen an dem Verbindungspunkt zwischen dem ersten (8a) und dem zweiten (8b) Segment der hinteren Seitenwand (8) der Lichtleiterplatte (6) erreicht.

6. Kraftfahrzeug-Beleuchtungsvorrichtung nach einem der vorangehenden Ansprüche, **dadurch gekennzeichnet, dass** die Verbindungslinie (13) zwischen dem ersten (11) und dem zweiten (12) plattenartigen Sektor im Wesentlichen geradlinig ist.

7. Kraftfahrzeug-Beleuchtungseinrichtung nach Anspruch 6, **dadurch gekennzeichnet, dass** sich die Verbindungslinie (13) auf der Lichtleiterplatte (6) mit einem Neigungswinkel (α) größer als 60° in Bezug auf eine optische Hauptachse (X) der Beleuchtungsvorrichtung, die im Wesentlichen parallel zu der Längsachse des Fahrzeugs angeordnet ist, wenn die Beleuchtungsvorrichtung (1) an der Fahrzeugkarosserie platziert ist, erstreckt.

8. Kraftfahrzeug-Beleuchtungsvorrichtung nach Anspruch 7, **dadurch gekennzeichnet, dass** sich die Verbindungslinie (13) auf der Lichtleiterplatte (6) erstreckt, die im Wesentlichen senkrecht zu der optischen Hauptachse (X) bleibt.

9. Kraftfahrzeug-Beleuchtungsvorrichtung nach einem der vorangehenden Ansprüche, **dadurch gekennzeichnet, dass** die erste laterale Seitenwand (10) der Lichtleiterplatte (6) ein gestuftes Profil aufweist.

10. Kraftfahrzeug-Beleuchtungsvorrichtung nach einem der vorangehenden Ansprüche, **dadurch gekennzeichnet, dass** der erste (11) und der zweite (12) plattenartige Sektor aus Kunststoff gefertigt sind.

11. Kraftfahrzeug-Beleuchtungsvorrichtung nach Anspruch 10, **dadurch gekennzeichnet, dass** der erste (11) und der zweite plattenartige Sektor (12) durch ein Koinjektionsverfahren hergestellt sind.

12. Kraftfahrzeug-Beleuchtungsvorrichtung nach einem der Ansprüche 2 bis 11, **dadurch gekennzeichnet, dass** die erste Lichtquelle (18) eine Reihe von LED-Dioden (18) umfasst, die im Inneren des hinteren Gehäuses (2) in der Nähe des ersten Segments (8a) der hinteren Seitenwand (8) der Lichtleiterplatte (6) angeordnet und so ausgerichtet sind, dass sie das erzeugte Licht direkt in den ersten plattenartigen Sektor (11) leiten.

13. Kraftfahrzeug-Beleuchtungsvorrichtung nach Anspruch 12, **dadurch gekennzeichnet, dass** das erste Segment (8a) der hinteren Seitenwand (8) der Lichtleiterplatte (6) so geformt/strukturiert ist, dass es einen Teil der Lichtstrahlen (r₁), die von der Reihe von LED-Dioden (18) kommen und in Richtung zu der vorderen Seitenwand (7) der Lichtleiterplatte (6) gerichtet sind, in einer Richtung kollimiert, die im Wesentlichen parallel zu einer optischen Hauptachse (X) der Beleuchtungsvorrichtung verläuft, die im Wesentlichen parallel zur Längsachse des Fahrzeugs angeordnet ist, wenn die Beleuchtungsvorrichtung (l) an der Fahrzeugkarosserie platziert ist.

14. Kraftfahrzeug-Beleuchtungsvorrichtung nach einem der Ansprüche 3 bis 13, **dadurch gekennzeichnet, dass** die zweite Lichtquelle (19) eine oder mehrere LED-Dioden (19) umfasst, die im Inneren des hinteren Gehäuses (2) gegen das zweite Segment (8b) der hinteren Seitenwand (8) der Lichtleiterplatte (6) platziert und so ausgerichtet sind, dass sie das erzeugte Licht direkt in das Innere des zweiten plattenartigen Sektors (12) lenken.

15. Kraftfahrzeug-Beleuchtungsvorrichtung nach Anspruch 14, **dadurch gekennzeichnet, dass** das zweite Segment (8b) der hinteren Seitenwand (8) der Lichtleiterplatte (6) so strukturiert/geformt ist, dass es einen Teil der Lichtstrahlen (r₂), die von der LED-Diode oder den Dioden (19) der zweiten Lichtquelle (19) kommen und in Richtung zu der lateralen Seitenwand (10) der Lichtleiterplatte (6) reflektiert werden, in einer Richtung kollimiert, die die laterale Seitenwand (10) mit einem Einfallswinkel schneidet, der größer als der Grenzwinkel ist, um somit die Totalreflexion der Lichtstrahlen (r₂) in Richtung zu der Verbindungslinie (13) und in Richtung zu der vorderen Seitenwand (7) der Lichtleiterplatte (6) zu bewirken.

16. Kraftfahrzeug-Beleuchtungsvorrichtung nach einem der vorangehenden Ansprüche, **dadurch gekennzeichnet, dass** der transparente oder halbtransparente Abschnitt (4) der vorderen Halbschale (3) im Wesentlichen bandartig ist.

## Revendications

1. Appareil d'éclairage automobile (1) comprenant :
un boîtier arrière (2) sensiblement en forme de cuvette ; une demi-coque avant (3) qui est agencée pour fermer l'ouverture (2a) du boîtier arrière (2), et est munie d'au moins une portion transparente ou semi-transparente (4) ; et au moins un premier ensemble d'éclairage (5) qui émet de la lumière sur commande, et qui est située à l'intérieur du boîtier arrière (2) de manière à pouvoir rétro-éclairer ladite portion transparente ou semi-transparente (4) de la demi-coque avant (3);
ledit ensemble d'éclairage (5) comprenant: au moins une plaque de guidage de lumière (6) constituée d'un matériau photoconducteur, qui est agencée à l'intérieur du boîtier arrière (2) avec une paroi latérale avant (7) de la plaque faisant face à ladite portion transparente ou semi-transparente (4) de la demi-coque avant (3), et avec une paroi latérale arrière (8) de la plaque faisant face au boîtier arrière (2) ; et des moyens d'émission de lumière (9) qui sont situés à l'intérieur du boîtier arrière (2) au niveau ou à proximité de la paroi latérale arrière (8) de la plaque de guidage de lumière (6), et sont adaptés pour diriger la lumière produite à l'intérieur de la plaque de guidage de lumière (6) de sorte que ladite lumière se déplace à l'intérieur de la plaque de guidage de lumière (6) vers la paroi latérale avant (7) de la plaque de guidage de lumière (6) et est émise depuis la plaque de guidage de lumière (6) à travers la même paroi latérale avant (7) dirigée vers ladite portion transparente ou semi-transparente (4) de la demi-coque avant (3) ;
dans lequel la plaque de guidage de lumière (6) est divisée en au moins un premier (11) et un second (12) secteur en forme de plaque coplanaires l'un avec l'autre, qui sont agencés mutuellement adjacents et contigus, sont constitués de matériaux photoconducteurs ayant des indices de réfraction différents l'un de l'autre, et sont assemblés de manière stable l'un à l'autre pour former un corps/une pièce unique en forme de plaque le long d'une ligne d'assemblage (13) qui s'étend sensiblement à partir du sommet (14) de la plaque de guidage de lumière (6) délimité par la paroi latérale avant (7) et par une première paroi latérale de côté (10) de la plaque de guidage de lumière (6), jusqu'à un point intermédiaire de la paroi latérale arrière (8) de la plaque de guidage de lumière (6).

2. Appareil d'éclairage automobile selon la revendication 1, **caractérisé en ce que** les moyens d'émission de lumière (9) comprennent une première source lumineuse (18) qui est située à l'intérieur du boîtier arrière (2) au niveau ou à proximité d'un premier segment (8a) de la paroi latérale arrière (8) de la plaque de guidage de lumière (6), et est adaptée pour diriger la lumière produite (r₁) à l'intérieur du premier secteur en forme de plaque (11) de la plaque de guidage de lumière (6), de sorte que ladite lumière (r₁) se déplace à l'intérieur de la plaque de guidage de lumière (6) vers ladite paroi latérale avant (7).

3. Appareil d'éclairage automobile selon la revendication 1 ou 2, **caractérisé en ce que** les moyens d'émission de lumière (9) comprennent une seconde source lumineuse (19), qui est située à l'intérieur du boîtier arrière (2) au niveau ou à proximité d'un second segment (8b) de la paroi latérale arrière (8) de la plaque de guidage de lumière (6), et est capable de diriger la lumière produite (r₂) à l'intérieur du second secteur en forme de plaque (12) de la plaque de guidage de lumière (6), de sorte que ladite lumière (r₂) se déplace à l'intérieur de la plaque de guidage de lumière (6) vers ladite première paroi latérale de côté (10) de la plaque de guidage de lumière (6), et est ainsi réfléchie vers la paroi latérale avant (7) de la plaque de guidage de lumière (6).

4. Appareil d'éclairage automobile selon la revendication 3, **caractérisé en ce que** la ligne d'assemblage (13) entre lesdits premier (11) et second secteurs en forme de plaque (12) est adaptée pour être traversée par la lumière (r₂) réfléchie par la première paroi latérale de côté (10) de la plaque de guidage de lumière (6) vers la paroi latérale avant (7) de la même plaque de guidage de lumière (6), et pour réfléchir, à l'opposé de la paroi latérale avant (7) de la plaque de guidage de lumière (6), la lumière (r₃) provenant de ladite seconde source lumineuse (19) et dirigée directement vers la paroi latérale avant (7) de la plaque de guidage de lumière (6) entrecoupant la ligne d'assemblage (13) sans avoir tout d'abord rebondi sur la première paroi latérale de côté (10) de la plaque de guidage de lumière (6).

5. Appareil d'éclairage automobile selon la revendication 3 ou 4, **caractérisé en ce que** la ligne d'assemblage (13) entre lesdits premier (11) et second secteurs en forme de plaque (12) atteint la paroi latérale arrière (8) de la plaque de guidage de lumière (6) sensiblement au point d'assemblage entre ledit premier (8a) et ledit second (8b) segment de la paroi latérale arrière (8) de la plaque de guidage de lumière (6) .

6. Appareil d'éclairage automobile selon l'une quelconque des revendications précédentes, **caractérisé en ce que** la ligne d'assemblage (13) entre lesdits premier (11) et second (12) secteurs en forme de plaque est sensiblement rectiligne.

7. Appareil d'éclairage automobile selon la revendication 6, **caractérisé en ce que** la ligne d'assemblage (13) s'étend sur la plaque de guidage de lumière (6) avec un angle d'inclinaison (α) supérieur à 60° par rapport à un axe optique principal d'appareil d'éclairage (X) qui est agencé sensiblement parallèlement à l'axe longitudinal du véhicule lorsque l'appareil d'éclairage (1) est placé sur la carrosserie de véhicule.

8. Appareil d'éclairage automobile selon la revendication 7, **caractérisé en ce que** la ligne d'assemblage (13) s'étend sur la plaque de guidage de lumière (6) en restant sensiblement perpendiculaire audit axe optique principal (X).

9. Appareil d'éclairage automobile selon l'une quelconque des revendications précédentes, **caractérisé en ce que** ladite première paroi latérale de côté (10) de la plaque de guidage de lumière (6) a un profil étagé.

10. Appareil d'éclairage automobile selon l'une quelconque des revendications précédentes, **caractérisé en ce que** lesdits premier (11) et second (12) secteurs en forme de plaque sont constitués d'une matière plastique.

11. Appareil d'éclairage automobile selon la revendication 10, **caractérisé en ce que** lesdits premier (11) et second secteurs en forme de plaque (12) sont constitués via un procédé de moulage par co-injection.

12. Appareil d'éclairage automobile selon l'une quelconque des revendications 2 à 11, **caractérisé en ce que** la première source lumineuse (18) comprend une série de diodes LED (18), qui sont placées à l'intérieur du boîtier arrière (2) adjacent au premier segment (8a) de la paroi latérale arrière (8) de la plaque de guidage de lumière (6), et sont orientées de manière à diriger la lumière produite directement à l'intérieur du premier secteur en forme de plaque (11).

13. Appareil d'éclairage automobile selon la revendication 12, **caractérisé en ce que** le premier segment (8a) de la paroi latérale arrière (8) de la plaque de guidage de lumière (6) est conformé/structuré de manière à collimater une partie des rayons lumineux (r₁) provenant de ladite série de diodes LED (18) et dirigée vers la paroi latérale avant (7) de la plaque de guidage de lumière (6), dans une direction sensiblement parallèle à un axe optique principal d'appareil d'éclairage (X) qui est agencé sensiblement parallèle à l'axe longitudinal du véhicule lorsque l'appareil d'éclairage (1) est placé sur la carrosserie de véhicule.

14. Appareil d'éclairage automobile selon l'une quelconque des revendications 3 à 13, **caractérisé en ce que** la seconde source lumineuse (19) comprend une ou plusieurs diodes LED (19) qui sont placées à l'intérieur du boîtier arrière (2) contre le second segment (8b) de la paroi latérale arrière (8) de la plaque de guidage de lumière (6), et sont orientées de manière à diriger la lumière produite directement à l'intérieur du second secteur en forme de plaque (12).

15. Appareil d'éclairage automobile selon la revendication 14, **caractérisé en ce que** le second segment (8b) de la paroi latérale arrière (8) de la plaque de guidage de lumière (6) est structuré/conformé de manière à collimater une partie des rayons lumineux (r₂) provenant de la diode ou des diodes LED (19) de la seconde source lumineuse (19) et réfléchie vers la paroi latérale de côté (10) de la plaque de guidage de lumière (6), dans une direction qui entrecoupe ladite paroi latérale de côté (10) avec un angle d'incidence supérieur à l'angle limite, de manière à provoquer la réflexion totale des rayons lumineux (r₂) vers la ligne d'assemblage (13) et vers la paroi latérale avant (7) de la plaque de guidage de lumière (6).

16. Lampe automobile selon l'une quelconque des revendications précédentes, **caractérisée en ce que** la portion transparente ou semi-transparente (4) de la demi-coque avant (3) est sensiblement en forme de ruban.
